# EUROPÄISCHE PATENTSCHRIFT

(11) **EP 2 943 337 B1**
(45) Veröffentlichungstag und Bekanntmachung des Hinweises auf die Patenterteilung: **05.09.2018**
(21) Anmeldenummer: 14701490.6
(22) Anmeldetag: 10.01.2014
(51) Int. Cl.: B32B 17/10, C03C 27/12

(54) **FLUORESZENZ-DISPLAYS ENTHALTEND EINE ZWISCHENSCHICHTFOLIE AUS WEICHMACHERHALTIGEM POLYVINYLACETAL**
FLUORESCENT DISPLAYS CONTAINING AN INTERLAYER FILM OF POLYVINYLACETAL WHICH COMPRISES PLASTICIZERS
ÉCRANS FLUORESCENTS CONTENANT UNE FEUILLE INTERCALAIRE EN POLYACÉTAL DE VINYLE PLASTIFIANT

(30) Priorität: 11.01.2013 DE 102013100268
(43) Veröffentlichungstag der Anmeldung: 18.11.2015
(73) Patentinhaber: Kuraray Europe GmbH, 65795 Hattersheim (DE)
(72) Erfinder: KELLER, Uwe, D-53177 Bonn (DE); LELLIG, Philip, 53840 Troisdorf (DE); BEEKHUIZEN, Jan, 53844 Troisdorf (DE)
(74) Vertreter: Kisters, Michael Marcus
(86) Internationale Anmeldenummer: PCT/EP2014/050400
(87) Internationale Veröffentlichungsnummer: WO 2014/108508

(56) Entgegenhaltungen:
- EP-A1- 2 409 833
- WO-A1-2012/072950
- WO-A2-2008/132368
- US-A1- 2002 120 916

## Beschreibung

### Technisches Gebiet

Zum Einspiegeln von Informationen in das Fahrersichtfeld finden aktuell in Personenkraftwagen sogenannte head-up displays (HUD) Anwendung. Hierfür wird von unten - aus einer im Armaturenbrettträger befindlichen Projektoreinheit - ein Bild an die Windschutzscheibe (WSS) projiziert, welches als virtuelles Bild vom Platz des Fahrers aus gesehen werden kann. Der Effekt beruht auf der Reflektionswirkung der zum Fahrzeuginnenraum hin orientierten Glasoberfläche sowie der zum Fahrzeugäußeren orientieren Glasoberfläche. Die inneren Glasoberflächen tragen fast nichts zur Reflektion bei, da diese bei dem gesetzlich vorgeschriebenen Verbundsicherheitsglas mit einer zwischen den Glasschichten befindlichen PVB-Folie verklebt sind, welches einen ähnlichen Brechungsindex wie Glas aufweist.

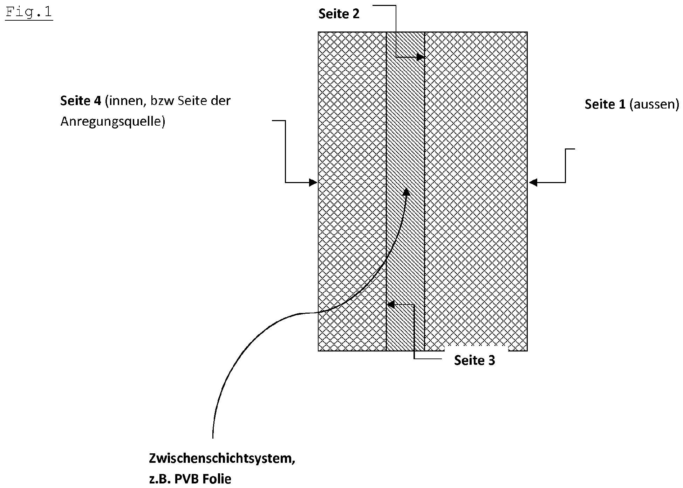

Zur einfacheren Benennung der vier Glasoberflächen einer Windschutzscheibe üblichen Aufbaus bedient man sich folgender in Fig. 1 gezeigter Konvention:

| | |
|---|---|
| Seite 1 | äußere Oberfläche der zum Fahrzeugäußeren orientierten Scheibe des Verbundkörpers |
| Seite 2 | zur Zwischenschichtfolie orientierte innere Oberfläche der äußeren Scheibe im Verbundkörper |
| Seite 3 | zur Zwischenschichtfolie orientierte innere Oberfläche der inneren Scheibe im Verbundkörper |
| Seite 4 | zum Fahrzeuginneren hin orientierte Oberfläche der inneren Scheibe des Verbundkörpers |

In aller Regel wird als Zwischenschichtfolie eine Folie aus weichgemachtem Polyvinylbutyral, kurz PVB-Folie verwendet.

Zur Elimination von Doppelbildern bei konventionellen HUD mit dem beschriebenen Funktionsprinzip müssen die Seite 1 und 4 zugehörigen Glasoberflächen einen bestimmten Winkel zueinander aufweisen. Dies wird durch Verwendung von PVB-Folien mit einem keilförmigen Dickenprofilverlauf realisiert. Solche Folien sind jedoch schwierig zu verarbeiten und aufwendig in der Herstellung, was sie wesentlich teurer als die nichtkeilförmigen Folienpendants werden lässt.

Weitere Nachteile von konventionellen HUD liegen darin, dass die Information nur in einem eingeschränkten Sichtfeld direkt vor dem Fahrer visualisiert werden kann und auch nur für diesen sichtbar ist. Tatsächlich gibt es aber viele Situationen, in welchen Informationen auch für Passagiere sichtbar bzw. an anderer Stelle der Windschutzscheibe eingeblendet werden sollen. Beispielsweise ist denkbar, als sicherheitsrelevante Warninformation die Kontur von auf oder neben der Fahrbahn befindlichen Hindernissen, wie sie in aktuellen Fahrzeugen bereits von Nachtsichtsystemen erfasst werden kann, direkt in die Windschutzscheibe zu projizieren. Auch wird bei einem konventionellen HUD durch auf der Windschutzscheibe befindliche Regentropfen das Bild verzerrt, da dann der der optimierten Systemkonfiguration zugrundeliegende Brechungsindexübergang zwischen Glas und Luft verfälscht wird.

Als Alternative zu diesen konventionellen HUD wurde bereits vorgeschlagen, durch in der Ebene der Windschutzscheibe angeordnete fluoreszierende Materialien und deren gezielter Anregung Bilder zu generieren (sog. Fluoreszenz-HUD). Die Anregung dieser Stoffe erfolgt mit für das menschliche Auge unsichtbarer UV-Strahlung, wodurch reale, nicht nur für den Fahrer sichtbare Bilder in Ebene der Windschutzscheibe erzeugt werden können. Als fluoreszierende Materialien wurden etwa entsprechende organische Farbstoffe, anorganische Partikel etc. vorgeschlagen.

### Stand der Technik

Zur Herstellung von Fluoreszenz-HUD ist bekannt, auf die Seite 4 der Windschutzscheibe fluoreszierende Pigmente oder Farbstoffe in Form von Beschichtungen, aufkaschierten Folien oder ähnlich aufzubringen. Alternativ wurde vorgeschlagen, zwischen Seite 3 und der PVB-Zwischenschicht Fluorophore enthaltende Folien zu positionieren bzw. die zu Seite 3 orientierte Oberfläche der PVB-Folie mit Fluorophoren zu bedrucken.

WO 2012/072950A1 offenbart, eine PVB-Folie mit bestimmten niedermolekularen Fluorophoren so zu bedrucken, dass sich diese während des Autoklavenprozess gleichmäßig in der Folie verteilen. Hierbei sollen die Fluorophore gleichzeitig als UV-Absorber wirksam sein. WO 2012/072950A1 beschreibt hierzu die Verwendung von niedermolekularen Hydroxyterephthalaten, insbesondere von 2,5-Dihydroxydiethylterephthalat, als Fluorophor sowie von Antioxidantien, welche auf eine PVB-Folie aufgebracht werden. Der Fluorophor verteilt sich hierbei in der PVB-Folie und kann entweder selber als UV-Absorber wirken oder sich mit einem in der Folie vorhandenem niedermolekularen UV-Absorber vermischen.

Aus WO2008132368 A9 ist bekannt, das Fluoreszenz-HUD ein oder mehrere anorganische Luminophore enthaltende Schichten in einer Dicke von weniger als 20 µm an der Seite 3 eines Verbundkörpers zusätzlich zu einer herkömmlichen PVB-Folie enthalten können. Da herkömmliche PVB-Folien jedoch in geringer Menge niedermolekulare UV-Absorber enthalten, kann solch ein niedermolekularer UV-Absorber leicht in die die Luminophore enthaltende Schicht einwandern und dort die Fluoreszenz löschen. Es besteht zudem die Gefahr, dass teilweise eine unkontrollierte Anregung durch Sonnenlicht von außen erfolgen kann, da eine Resttransmission für UV-Strahlung bei herkömmlichen PVB-Folien üblicherweise vorzufinden ist. Weiterhin muss Augenmerk darauf gerichtet werden, dass keine zu Trübung führende Lichtstreuung durch ungeeignet große Partikel auftritt. Die geringe Schichtdicke der die Luminophore enthaltenden Schichten von 20pm begrenzt die einsetzbare Menge an Fluorophoren, da zu hohe Konzentrationen zu Trübungen führen. Damit ist auch die maximal erreichbare Intensität der Fluoreszenzemission begrenzt.

In US 2002/0120916 A1 sind head-up displays mit Fluorezenzfarbstoffen beschrieben, bei denen die dem Betrachter zugewandte Seite UV-Absorber enthält. Hiermit soll verhindert werden, dass die Anregungsstrahlung für die Fluoreszenzfarbstoffe durch das Display hindurch auf die Außenseite strahlt. Zu diesem Zweck sind in US 2011 1073773 A1 Fluorezenzdisplays offenbart, die ein opaques Material auf der dem Betrachter abgewandten Seite des Displays aufweist.

In EP 2409833 ist ein Fluorezenz-Display beschrieben, bei dem die Fluorezenzfarbstoffe auf der dem Sonnenlicht zugewandten Seite angeordnet sind.

Diese bekannten Fluorezenz-Displays haben den Nachteil, dass die Fluorezenz-Farbstoffe unerwünscht durch das Sonnenlicht angeregt werden können. Eine solche Anregung führt optisch zu einer Trübung des Displays, was für die Verwendung in Kfz-Windschutzscheiben unakzeptabel ist.

Nach dem bekannten Stand der Technik ergeben sich die folgenden Probleme, welche die Brillanz und die Schärfe sowie die Langlebigkeit der im Display dargestellten Information beeinträchtigen. Die üblichen zur Herstellung von Automobilverglasung erhältlichen PVB-Folien enthalten geringe Mengen niedermolekularer UV-Absorber, insbesondere vom Typ Tinuvin 326 bzw. Tinuvin 327.

Da die UV-Absorber genau im selben Wellenlängenbereich wirksam sind, in welchem auch die Anregung der Fluorophore stattfinden soll, wird ein großer Teil der UV-Strahlung absorbiert, statt für die Anregung der Fluorophore zur Verfügung zu stehen.

Wird also ein niedermolekularer Fluorophor einfach auf die Oberfläche einer PVB-Folie aufgebracht, welche bereits einen UV-Absorber enthält, wird sich der Fluorophor durch Diffusion über die gesamte Dicke der Folie verteilen. Der Fluorophor kann dann aber nur in unmittelbarer Nähe der Glasoberfläche emittieren, da nur hier UV-Strahlung in ausreichender Intensität auf das Fluorophor trifft, weil sie aufgrund der vorhandenen UV-Absorber nicht nennenswert in die Tiefe der Folienschicht eindringen kann. Dies macht zur Erzielung einer ausreichenden Brillanz hohe Konzentrationen an Fluorophoren notwendig, was sich dann wiederum negativ auf den Gelbstich der Folie bzw. der Verglasung und die Kosten des Displaysystems auswirken kann. Selbstverständlich gilt Analoges, wenn der Fluorophor direkt bei Herstellung der PVB-Folie als Additiv in diese eingebracht wird.

Besonders erschwerend kommt hinzu, dass Fluorophore durch Diffusion auch an Seite 2 (s. Fig.1) der Windschutzscheibe gelangen, wo sie einerseits durch Sonnenlicht ausbleichen können, da an dieser Stelle kein Schutz durch in der Folie enthaltene UV-Absorber mehr vorhanden ist, andererseits unkontrolliert durch den UV-Anteil der Sonnenstrahlung zur Fluoreszenz angeregt werden können.

### Aufgabe

Es bestand daher die Aufgabe, Zwischenschichtfolien für Fluoreszenz-Displays aus Glas/Glaslaminaten bereitzustellen, bei denen diese Nachteile konstruktiv nicht auftreten können. Im Rahmen der Erfindung wird die o.g. in Fig. 1 dargestellte Konvention zur Bezeichnung der Oberflächen eines Glas/Glaslaminats auch bei Fluoreszenz-Displays aus Glas/Glaslaminaten für weitere Anwendungsfeldern, wie zum Beispiel Displayeinheiten zur Verwendung im Bau- und Werbebereich etc. eingesetzt. Hierbei bezeichnet dann Seite 4 die der Quelle für die Anregungsstrahlung zugewandte Seite. Insbesondere sollte die an Seite 2 des Fluoreszenz-Displays anliegende Zwischenschichtlage eine hohe Lichttransmission und gleichzeitig eine geringe UV-Transmission aufweisen. Hierdurch werden die folgenden Effekte erreicht: Schutz des dahinter befindlichen Fluorophors vor Ausbleichen, Verhindern des Verlassens von UV-Strahlung der Anregungsquelle, Verhindern der unkontrollierten Anregung durch den UV-Anteil der Sonnenstrahlung und Sicherstellen der üblicherweise geforderten geringen UV-Transmission für das Gesamtbauteil.

### Darstellung der Erfindung

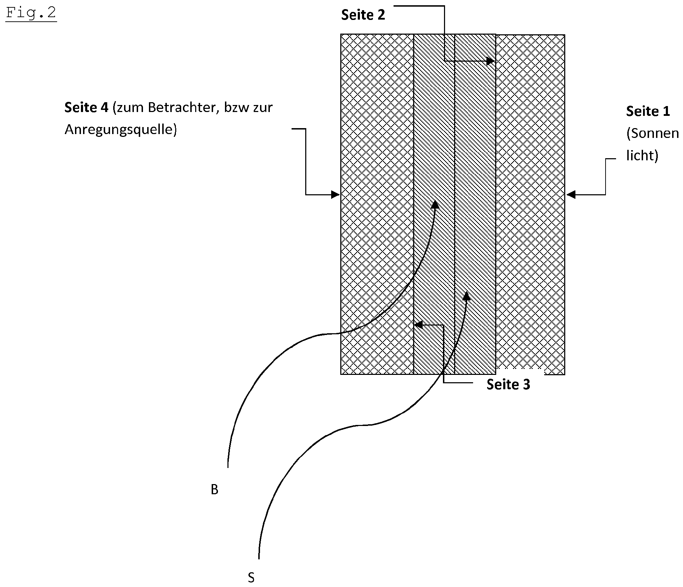

Die grundsätzliche Anordnung der Schichten ist in Fig. 2 skizziert.

Es wurde gefunden, das eine Zwischenschicht oder Zwischenschichtkombination, in welcher UV-Absorber und Fluorophor dauerhaft voneinander räumlich getrennt vorliegen oder bei welcher eine hohe Konzentration an Fluorophor nahe Seite 3 dauerhaft erhalten bleibt, diese Voraussetzungen besitzt.

Gegenstände der vorliegenden Erfindung sind daher Fluoreszenz-Displays gemäss den Ansprüchen 1 bis 5 aus einem Glas/Glaslaminat mit einer dem Sonnenlicht zugewandten Seite S und einer dem Betrachter des Fluoreszenz-Displays zugewandten Seite B, mit mindestens einer Zwischenschichtfolie enthaltend UV-Absorber, Fluorophore und weichmacherhaltiges Polyvinylacetal, wobei UV-Absorber und Fluorophore in der Zwischenschichtfolie so räumlich angeordnet sind, das die Fluorophore durch UV-Strahlung angeregt werden können, ohne das die UV-Absorber diese absorbiert wobei die UV-Absorber auf der dem Sonnenlicht zugewandten Seite S des Fluorezenz-Displays angeordnet sind, jeweils in Verbindung mit den Ausführungsformen 1 bis 5. Bevorzugte Ausführungsformen sind in den abhängigen Ansprüchen gezeigt.

In einer beispielhaften Anwendung des Fluoreszenz-Displays als Windschutzscheibe eines KFZ ermöglich diese Anordnung das sich die Fluorophore durch UV-Strahlung aus dem Fahrzeuginnenraum bzw. von Seite 4 einer Displayeinheit aus anregen lassen, ohne dass die eigentlich zur Anregung bereitgestellte Strahlung bereits vom UV-Absorber absorbiert wird.

In einer ersten Ausführungsform der Erfindung enthält das Fluoreszenz-Display eine Zwischenschichtfolie aufweisend
- mindestens eine erste Schicht weichmacherhaltiges Polyvinylacetal enthaltend einen der üblichen niedermolekularen UV-Absorber, die auf der Seite S des Fluorezenz-Displays angeordnet ist
- mindestens eine dünne Schicht als Diffusionsperre für Fluorophor und niedermolekularen UV-Absorber und
- mindestens eine zweite Schicht aus weichmacherhaltigem Polyvinylacetal und/oder Polyurethan und/oder EVA jeweils enthaltend ein oder mehrere Fluorophore, keinen niedermolekularen UV-Absorber oder einen nicht bei der gewählten Anregungswellenlänge der Fluorophore absorbierenden UV-Absorber, die auf der Seite B des Fluorezenz-Displays angeordnet ist.

Die dünne als Diffusionssperre wirkende Schicht ist vorzugsweise eine dünne Folie aus PET oder modifiziertem PET.

Bevorzugt wird im Falle von nicht-modifiziertem PET biaxial verstrecktes PET und im Fall eines modifiziertem PET PETG (Poly(cyclohexanedimethylen terephthalat-co-ethylene terephthalat) verwendet. Des Weiteren können als Diffusionssperre Schichten aus Polyvinylalkohol bzw. ethylenmodifiziertem Polyvinylalkohol (z.B. Exceval®) sowie Ethylenvinylalkohol-Copolymere (z.B. EVAL®) eingesetzt werden.

Der oder die Fluorophore können bei der Herstellung der Zwischenschichtkombination bzw. der zweiten Schicht, z.b. in einem Extrusionsverfahren, in diese eingebracht werden. Alternativ ist auch ein Aufbringen auf eine der Oberflächen der zweiten Schicht möglich. Hierfür kommen prinzipiell sämtliche geeigneten Beschichtungs-, Druck-, Transfer-, Sprayverfahren etc. in Frage. Das Aufbringen kann auch erst im Zuge des Laminationsschrittes dadurch erfolgen, dass der oder die Fluorophore zunächst auf der im Verbundkörper Seite 3 entsprechenden Oberfläche oder auf der als Diffusionssperre wirksamen Schicht bereitgestellt werden.

Ebenfalls können der oder die Fluorophore auf der Anregungsquelle zugewandten Oberfläche der in Folienform bereitgestellten dünnen, als Diffusionssperre dienenden Schicht in Form einer Bedruckung oder Beschichtung dauerhaft aufgebracht sein. Zusätzlich oder alternativ kann die dünne, als Diffusionssperre dienende Schicht auf ihrer der Anregungsquelle abgewandten Oberfläche mit einer Infrarotstrahlung absorbierenden oder reflektierenden Beschichtung versehen sein.

Die zweite Schicht kann bei Weglassen der Fluorophore in einer Schichtdicke von 0.38 mm bei Messung zwischen 2 x 2 m Planilux eine UV-Transmission gemäß EN 410 von mehr als 10, bevorzugt 20, bevorzugt mehr als 35 und am meisten bevorzugt mehr als 50% aufweisen.

Vorzugsweise bestehen die erste und zweite Schicht aus weichgemachten Polyvinylacetal, insbesondere weichmacherhaltigem Polyvinylbutyral (n und/oder iso Butyral), PU oder EVA.

In einer zweiten Ausführungsform der Erfindung enthält das erfindungsgemäße Fluoreszenz-Display eine Zwischenschichtfolie aufweisend
- mindestens eine erste Schicht weichmacherhaltiges Polyvinylacetal enthaltend einen der üblichen niedermolekularen UV-Absorber die auf der Seite S des Fluorezenz-Displays angeordnet ist
- auf oder an diese Schicht angeordnetes Fluorophor mit geringer Diffusionsneigung, die auf der Seite B des Fluorezenz-Displays angeordnet ist

Fluorophore mit geringer Diffusionsneigung können sein: fluoreszierende organische Polymere, Fluorophore mit ionischen Gruppen, fluoreszierende Nanopartikel, im Weichmacher der herkömmlichen Folie schlecht lösliche Fluorophore (bei 20°C weniger als 5g/L)

Der Vorteil dieser Ausführungsform ist, dass das Fluorophor in hoher lokaler Konzentration an der Seite 3 unmittelbar anliegenden Grenzfläche verbleibt. Die dahinterliegende Folienschicht enthält zwar einen zur Migration fähigen UV-Absorber, dieser kann aber nicht vor die Fluorophore gelangen.

Die Fluorophore können aufgedruckt, durch Beschichten oder Besprühen aufgebracht oder in Form von dünnen, zusätzlich in das Glas/Glaslaminat zwischen die herkömmliche Folie und Glasseite 3 einlaminierten Folien eingebracht werden oder in eine auf die herkömmlichen Folie aufextrudierte Lage eingebracht worden sein.

In einer dritten Ausführungsform der Erfindung enthält das erfindungsgemäße Fluoreszenz-Display eine Zwischenschichtfolie aufweisend
- mindestens eine erste Schicht weichmacherhaltiges Polyvinylacetal enthaltend einen UV-Absorber mit geringer Diffusionsneigung die auf der Seite S des Fluorezenz-Displays angeordnet ist
- auf oder an diese Schicht angeordnetes Fluorophor mit geringer Diffusionsneigung die auf der Seite B des Fluorezenz-Displays angeordnet ist

Nicht oder nur sehr wenig zur Diffusion befähigten UV-Absorber können insbesondere sein: Polymere UV-Absorber wie z.B. Polycrylene S1 der Firma Hallstar, UV-Absorber mit ionischen Gruppen, UV-Absorbierende Nanopartikel, als Partikel in der Folienmatrix vorliegende organische UV-Absorber. Diese erste Folie ist frei von den üblichen niedermolekularen UV-Absorbern, bzw. enthält nur solche, die bei Anregungswellenlänge der Fluorophore nicht absorbieren (z.b. UV-B-Absorber, Bsp. Sandovur VSUC).

In einer ersten Variante dieser Ausführungsform wird die erste Schicht/Folie mit Fluorophoren geringer Diffusionsneigung bedruckt.

In einer zweiten Variante dieser Ausführungsform wird an Seite 3 eine zweite Folie oder Schicht aufgebraucht, welche Fluorophore geringer Diffusionsneigung enthalten.

In einer vierten Ausführungsform der Erfindung enthält das erfindungsgemäße Fluoreszenz-Display eine Zwischenschichtfolie aufweisend
- mindestens eine erste Schicht weichmacherhaltiges Polyvinylacetal enthaltend einen nicht oder nur sehr wenig zur Diffusion befähigten UV-Absorber die auf der Seite S des Fluorezenz-Display angeordnet ist
- mindestens eine zweite Schicht frei von UV-Absorber aber enthaltend ein Fluorophor, bevorzugt Fluorophore geringer Diffusionsneigung, die auf der Seite B des Fluorezenz-Displays angeordnet ist.

In dieser Ausführungsform können die Fuorophore nur in Teilbereichen der Schichten enthalten sein, was zu einem Fluoreszenzband statt dem bei Windschutzscheiben üblichen Farbkeil/Farbband führt. Es ist auch möglich die Schicht auf der inneren Seite mit einem Fluoreszenzband und auf der äußeren Seite mit einem pigmentierten Farbkeil zur Kontrasterhöhung auszustatten.

In einer fünften Ausführungsform der Erfindung enthält das erfindungsgemäße Fluoreszenz-Display eine Zwischenschichtfolie aufweisend
- mindestens eine erste Schicht weichmacherhaltiges Polyvinylacetal enthaltend einen der üblichen niedermolekularen UV-Absorber, die auf die Seite S des Fluorezenz-Displays angeordnet ist
- mindestens eine dünne Folie als Diffusionsperre enthaltend mindestens ein Fluorophor die auf der Seite B des Fluorezenz-Display angeordnet ist
- mindestens eine zweite Schicht weichmacherhaltiges Polyvinylacetal enthaltend keinen UV-Absorber oder einen nicht bei der gewählten Anregungswellenlänge des Fluorophor absorbierenden UV-Absorber. Das in der zweiten Schicht eingesetzte Fluorophor muss nicht Diffusionsgehemmt sein.

In den o.g. Ausführungsformen der Erfindung können als niedermolekulare (konventionelle) UV-Absorber mit hohem Diffusionsvermögen Verbindungen z.B. des Benzotriazol-Typs wie etwa der Typen Tinuvin P, Tinuvin 328, Tinuvin 326, Tinuvin 327 oder substituierte Phenyltriazine vom Typ Tinuvin 1577 oder Cyasorb 1164 eingesetzt werden.

In den o.g. Ausführungsformen der Erfindung können als UV-Absorber mit keinem oder nur geringem Diffusionsvermögen z.B. Nanopartikel z.b. nano-TiO₂, UV-Absorbierende Polymere, in der vorliegenden Matrix schwer löslich UV-Absorber z.b. vom Benzoxazinon-Typ, schwach substituierten Diphenylhydroxyphenyltriazin-Typ ionische Gruppen aufweisende UV-Absorber, an das Polyvinylacetal chemisch angeknüpfte UV-Absorber, z.B. auf Basis Benzotriazol, Polymergebundene Crylen- oder Alkoxycrylengruppen, insbesondere solche mit einer Alkoxygruppe in einem der Phenylringe, wie z.b. in US 7.964.245 B2 aufgeführt, UV-absorbierende Polymere, wie sie in US 7008618 B1 genannt sind oder substituierte 2-Hydroxyphenylbenzotriazole, welche z.b. durch eine Erstergruppe an ein Polymer, insbesondere an ein Polyvinylacetal angebunden sind, verwendet werden.

Im Fall von weichgemachtem Polyvinylacetal werden UV-Absorber als schwer löslich betrachtet, die bei 20 °C eine Löslichkeit von weniger als 5g/L im jeweiligen Weichmacher aufweisen. Ein Beispiel hierfür ist Cyasorb UV 3638F.

Die UV-Absorber können erfindungsgemäß in einer Konzentration von 0,005 - 5 Gew%, bevorzugt 0,1 bis 2 Gew%, besonders bevorzugt 0,2 - 1,0 Gew% und insbesondere 0,1 - 0.8 Gew.% (jeweils bezogen auf die Schicht, in der die UV-Absorber enthalten sind) eingesetzt werden.

In den o.g. Ausführungsformen der Erfindung können als niedermolekulare Fluorophore eingesetzt werden: die bekannten Laserfarbstoffe, typische Fluoreszenzfarbstoffe etwa substituierte Coumarine, Acridine sowie Komplexe von Seltenerdmetallen.

In den o.g. Ausführungsformen der Erfindung können als Fluorophore mit keiner oder nur geringer Diffusionsneigung eingesetzt werden: z.B. fluoreszierende anorganische Nanopartikel, in der umgebenden Matrix schwer lösliche Fluoreszenzfarbstoffe z.B. substituierte Perylene bzw. Rylene oder Abkömmlinge des Quinacridons, Fluoreszenzfarbstoffe mit ionischen Gruppen oder ionischem Charakter wie z.B. Uranin sowie polymere Fluorophore.

Generell können als polymere Fluorophore fluoreszierende Polymere eingesetzt werden, welche die lichtemittierenden Einheiten innerhalb der Polymerkette oder an eine Polymerkette angeknüpft enthalten. Damit die Diffusionsneigung solch eines Polymeres in der umgebenden Matrix minimal ist, sollten erfindungsgemäß verwendbare fluoreszierende Polymere ein Molekulargewicht Mn von mehr als 2000, bevorzugt mehr als 5000 und am meisten bevorzugt mehr als 10000 g/mol aufweisen.

Die lokale Konzentration der fluoreszierenden Polymere in bzw. an der umgebenden Matrix wird so gewählt, dass eine hohe Fluoreszenz erhalten wird und keine starke Fluoreszenzlöschung erfolgt.

Beispiele für fluoreszierende Polymere, die im Rahmen der Erfindung eingesetzt werden können, sind unter vielen anderen: Poly(9-anthracenylmethyl acrylat), Poly(9-anthracenylmethyl methacrylat), Poly(3,3',4,4'-benzophenonetetracarboxylic dianhydride-alt-Acridine Yellow G), Poly(3,3',4,4'-benzophenonetetracarboxylic dianhydride-alt-3,6-diaminoacridine hemisulfat), Poly(fluorescein O-acrylat), Poly(fluorescein O-methacrylat), Poly[(methyl methacrylat)-co-(7-(4-trifluoromethyl)coumarin acrylamid)], Poly[(methyl methacrylat)-co-(9-anthracenylmethyl methacrylate)], Poly[(methyl methacrylat)-co-(7-(4-trifluoromethyl)coumarin methacrylamid)], Poly(pyromellitic dianhydrid-alt-acridin yellow G), Poly(1,4-phenylen) (PPP), Polyfluorene (PFO), Poly(thiophene), Polyquinoline, Poly[2,5-bis(3',7'-dimethyloctyloxy)-1,4-phenylenevinylen], Poly[9,9-bis-(2-ethylhexyl)-9H-fluorene-2,7-diyl], Poly[2-(2',5'-bis(2"-ethylhexyloxy)phenyl)-1,4-phenylenevinylen], Poly{[2-[2',5'-bis(2"-ethylhexyloxy)phenyl]-1,4-phenylenevinylen]-co-[2-methoxy-5-(2'-ethylhexyloxy)-1,4-phenylenevinylen]}, Poly[2,5-bisoctyloxy)-1,4-phenylenevinylen], Poly(2,5-bis(1,4,7,10-tetraoxaundecyl)-1,4-phenylenevinylen), Poly(3-cyclohexylthiophen-2,5-diyl), Poly(9,9-di-n-dodecylfluorenyl-2,7-diyl), Poly[(9,9-dihexylfluoren-2,7-diyl)-co-(anthracen-9,10-diyl)], Poly[(9,9-dihexylfluoren-2,7-diyl)-alt-(2,5-dimethyl-1,4-phenylen)], Poly(9,9-n-dihexyl-2,7-fluoren-alt-9-phenyl-3,6-carbazol), Poly[(9,9-dihexylfluoren-2,7-diyl)-co-(9-ethylcarbazol-2,7-diyl)], Poly(2,5-dihexyloxy-1,4-phenylenevinylen), Poly(9,9-di-n-octylfluorenyl-2,7-diyl), Poly(3-octylthiophen-2,5-diyl), Poly(3-octylthiophen-2,5-diyl), Poly[(o-phenylenevinylen)-alt-(2-methoxy-5-(2-ethylhexyloxy)-p-phenylenevinylen)], Poly[tris(2,5-bis(hexyloxy)-1,4-phenylenevinylen)-alt-(1,3-phenylenevinylen)], Poly[(1,4-phenylen-1,2-diphenylvinylen)], Polyquinoline

Die Anregung der erfindungsgemäß eingesetzten Fluorophore erfolgt bevorzugt durch Strahlung im nicht-sichtbaren Bereich des Lichts, wie im Wellenlängenbereich 300 - 420 nm, bevorzugt im Wellenlängenbereich 350 - 400 nm. Als Strahlungsquelle können insbesondere UV-Laser oder UV-LEDs eingesetzt werden.

Die erfindungsgemäß verwendeten Zwischenschichtfolien, insbesondere die Zwischenschichtfolien, in oder an der die Fluorophore angeordnet sind, können bevorzugt eine oder mehrere Schichten aus weichmacherhaltigem Polyvinylacetal, die bevorzugt:
a. einen Alkalititer im Bereich 0 - 50, 0-40, 0-35, 5-35 aufweisen. Hierdurch wird die Zersetzung der Fluorophore durch freie Säure oder hohe Alkalinität vermieden.
b. Lichtstablisatoren enthalten wie vom Typ HAS / HALS / NOR-HALS (sterisch gehinderten Aminoethern) zur Unterdrückung von Radikalkettenreaktionen
c. phenolisches Antioxidant wie BHT des Typs Lowinox 44B25 oder Irganox 245 enthalten
d. eine akustisch dämpfende Lage enthalten, so dass die erfindungsgemäße Zwischenschichtfolie bei Lamination zwischen 2 x 2.1 mm Glas und Messung gemäß ISO TS 16940 bei 20°C einen Verlustfaktor der lsten Mode von mehr als 0.15, bevorzugt 0.20 bevorzugt 0.25 aufweist. Die akustisch dämpfende Lage kann ebenfalls aus weichmacherhaltigem Polyvinylacetal bestehen.

Lichtstabilisatoren können insbesondere sterisch gehinderte Amine vom Typ HAS / HALS / NOR-HALS (sterisch gehinderte Aminoether wie die kommerziell erhältlichen Produkte Tinuvin 123 (NOR-HALS), Tinuvin 144, Tinuvin 622, Tinuvin 770 und dessen Di-N-methyliertes Derivat, der Fa. Ciba Specialities. Besonders gut geeignet sind ADK Stab LA-57, LA-52 oder LA-62 der Fa. Asahi Denka Co. oder UVINUL 4050 H der BASF AG.

Lichtstabilisatoren werden insbesondere in einem Anteil von 0,001 bis 1 Gew.% (bezogen auf die Folienmischung) eingesetzt.

Die dem Sonnenlicht zugewandte Seite oder Schicht S weist bei Messung im Verbund zwischen 2 x 2.1 mm Klarglas gemäß ISO 13837, Convention" A" (2008) eine UV-Transmission T_{UV}(400) von weniger als 30%, weniger als 20%, weniger als 15%, weniger als 8%, weniger als 6%, weniger 5%, bevorzugt weniger 4%, bevorzugt weniger als 3% und am meisten bevorzugt weniger als 2% auf.

Die dem Sonnenlicht zugewandte Seite oder Schicht S weist bei Messung im Verbund zwischen 2 x 2.1 mm Klarglas und Aufnahme eines UV/VIS Transmissionsspektrums gemäß ISO 13837 (2008) eine UV-Transmission T_{UV} von nicht mehr als 50%, nicht mehr als 30%, nicht mehr als 15%, nicht mehr als 10%, nicht mehr als 5%, bevorzugt nicht mehr als 3%, bevorzugt nicht mehr als 2% und am meisten bevorzugt nicht mehr als 1% auf.

Weitere Gegenstände der Erfindung ist die Verwendung der erfindungsgemäßen Fluoreszenz-Displays aus Glas/Glaslaminate unter Verwendung einer Zwischenschichtfolie mit en genannten Eigenschaften und/oder Zusammensetzungen, als KFZ-Windschutzscheibe, KFZ-Seitenverglasung, Verglasungen für Flugzeuge, Bahnen oder Schiffe und für Anwendungen im Baubereich wie Schaufenster, Aufzüge, oder Fassadenverglasung.

Hierzu kann in einer weiteren Variante Seite 4 des Glas/Glaslaminates mit einer in einem Wellenlängenbereich von 280 - 420 nm antireflektierend wirksamen Oberfläche (Beschichtung) versehen sein.

In einer weiteren Variante kann dieses Glas/Glaslaminat zur vereinfachten Durchstrahlung die innenliegende Glasscheibe eine geringere Dicke als die Äußere Glasscheibe aufweisen. Für KFZ-Anwendungen weist die Aussenscheibe bevorzugt eine Dicke von kleiner/gleich 3 mm, bevorzugt kleiner 2.6, bevorzugt kleiner 2 mm auf. Die zugehörige Innenscheibe weist bevorzugt eine Dicke von kleiner/gleich 2.6 mm, 2.2 mm, 2.0 mm, 1.8 mm, 1.6 mm auf.

Weiter Gegenstand der Erfindung ist eine KFZ-Fahrgastzelle mit einer Windschutzscheibe die ein erfindungsgemäßes erfindungsgemäßen Fluoreszenz-Displays aus Glas/Glaslaminate unter Verwendung einer Zwischenschichtfolie mit den genannten Eigenschaften und/oder Zusammensetzungen aufweist und Seitenscheiben und gegebenenfalls transparentes Dachmodul aus oder mit UV-Absorbierendem Glas.

Hierdurch wird das Fluoreszenz-Display in der Windschutzscheibe gegen Einstrahlen von Außenlicht und den damit verbundenen Kontrastverlust oder unkontrollierte Anregung geschützt. Das UV-Absorbierende Glas kann z.B. ein UV-absorbierendes monolithisches Glas oder ein Verbundglas mit einer üblichen, UV-Absorber enthaltenden PVB-Folie sein. Bevorzugt hat das genannte UV-absorbierende Glas eine UV-Transmission von weniger als 10% und bevorzugt weniger als 4% gemäß Bewertung und Messung nach ISO 13837, Convention" A" (2008).

Erfindungsgemäß verwendete Zwischenschichtfolien können durch Zusammenlegung einzeln extrudierter Teilfolien oder bevorzugt durch Coextrusion der Teilfolien hergestellt werden.

Erfindungsgemäß verwendete Zwischenschichtfolien aus Polyvinylacetalen können Weichmacher oder Weichmachermischungen aus mindestens einem der folgenden, für PVB-Folie bekannten Weichmacher enthalten: Di-2-ethylhexylsebacat (DOS), Di-2-ethylhexyladipat (DOA), Dihexyladipat (DHA), Dibutylsebacat (DBS), Triethylenglykol-bis-n-heptanoat (3G7), Tetraethylenglykol-bis-n-heptanoat (4G7), Triethylenglykol-bis-2-ethylhexanoat (3GO bzw. 3G8) Tetraethylenglykol-bis-n-2-ethylhexanoat (4GO bzw. 4G8), Di-2-butoxyethyladipat (DBEA), Di-2-butoxyethoxyethyladipat (DBEEA), Di-2-butoxyethylsebacat (DBES), Di-2-ethylhexylphthalat (DOP), Di-isononylphthalat (DINP), Triethylenglykol-bis-isononanoat, Triethylenglykol-bis-2-propylhexanoat, 1,2-Cyclohexandicarbonsäurediisononylester (DINCH), Tris(2-ethylhexyl)phosphat (TOF) und Dipropylenglykolbenzoat.

Erfindungsgemäß verwendete Zwischenschichtfolien aus Polyvinylacetal können einen Weichmachergehalt von 18 bis 36 Gew.% und bevorzugt 22 bis 30 Gew.% aufweisen.

Erfindungsgemäß verwendete Zwischenschichtfolien können weitere, dem Fachmann bekannte Zusätze enthalten wie Restmengen an Wasser, UV-Absorber, Antioxidantien, Haftungsregulatoren, optische Aufheller, Stabilisatoren, Farbmittel, Verarbeitungshilfsmittel, organische oder anorganische Nanopartikel, pyrogene Kieselsäure und/oder oberflächenaktive Stoffe.

Als Haftungsregulatoren (Antihaftmittel) werden im Rahmen der vorliegenden Erfindung Verbindungen verstanden, mit der die Haftung von weichmacherhaltigen Polyvinylacetalfolien an Glasoberflächen eingestellt werden kann. Verbindungen dieser Art sind dem Fachmann bekannt; in der Praxis werden hierzu häufig Alkali- oder Erdalkalimetallsalze von organischen Säuren, wie z.B. Kalium/Magnesiumacetat oder entsprechende Carboxylate mit mehr als 2 C Atomen. eingesetzt.

Zur Herstellung von Polyvinylacetal wird Polyvinylalkohol in Wasser gelöst und mit einem Aldehyd wie Butyraldehyd unter Zusatz eines Säurekatalysators acetalysiert. Das ausgefallene Polyvinylacetals wird abgetrennt, neutral gewaschen, ggf. in einem alkalisch eingestellten wässrigen Medium suspendiert, danach erneut neutral gewaschen und getrocknet.

Der Polyvinylalkoholgehalt von Polyvinylacetal kann durch die Menge des bei der Acetalisierung eingesetzten Aldehyds eingestellt werden. Es ist auch möglich, die Acetalisierung mit anderen oder mehreren Aldehyden mit 2-10 Kohlenstoffatomen (z.B. n- und/oder iso-Butyraldehyd, Valeraldehyd) durchzuführen.

Die auf weichmacherhaltigem Polyvinylacetal basierenden Folien enthalten bevorzugt unvernetztes Polyvinylbutyral (PVB), das durch Acetalisierung von Polyvinylalkohol mit Butyraldehyd gewonnen wird.

Der Einsatz von vernetzten Polyvinylacetalen, insbesondere vernetztem Polyvinylbutyral (PVB) ist ebenso möglich. Geeignete vernetzte Polyvinylacetale sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben. Auf die Offenbarung dieser Patentanmeldungen wird vollumfänglich Bezug genommen.

Als Polyvinylalkohol können im Rahmen der vorliegenden Erfindung auch Terpolymere aus hydrolysierten Vinylacetat/Ethylen-Copolymeren eingesetzt werden. Diese Verbindungen sind in der Regel zu mehr als 92 Mol% hydrolysiert und enthalten 1 bis 10 Gew.% auf Ethylen basierende Einheiten (z.B. Typ "Exceval" der Kuraray Europe GmbH).

Als Polyvinylalkohol können im Rahmen der vorliegenden Erfindung weiterhin auch hydrolysierte Copolymere aus Vinylacetat und mindestens einem weiteren ethylenisch ungesättigten Monomer eingesetzt werden.

Die Polyvinylalkohole können im Rahmen der vorliegenden Erfindung rein oder als Mischung von Polyvinylalkoholen mit unterschiedlichem Polymerisationsgrad oder Hydrolysegrad eingesetzt werden.

Erfindungsgemäß verwendete Zwischenschichtfolien können insbesondere Polyvinylacetale mit einem Anteil an Polyvinylacetatgruppen zwischen 0,1 und 11 Mol%, hierbei bevorzugt 0,1 - 4 Mol%, besonders bevorzugt 0,1 - 2 Mol% bzw. bei Verwendung als akustisch dämpfender Zusatzschicht 5 und 8 Mol% enthalten.

Zur Herstellung der erfindungsgemäß verwendete Zwischenschichtfolien können Teilfolien zunächst einzeln durch Extrusion hergestellt und anschließend mechanisch z.B. durch gemeinsames Aufrollen auf einen Folienwickel zusammengefügt werden.

Es ist auch möglich, die Zwischenschichtfolie durch gleichzeitige Coextrusion der Teilfolien herzustellen. Die Coextrusion kann z.B. mit einer entsprechend ausgestatteten Mehrschichtdüse oder einem Feed-Block erfolgen.

Im Automobilbereich werden häufig Folien verwendet, die im oberen Bereich ein sog. Farbband aufweisen. Hierzu kann entweder der obere Teil der Folie mit einer entsprechend eingefärbten Polymerschmelze coextrudiert werden oder es kann in einem Mehrschichtsystem eine der Teilfolien eine unterschiedliche Färbung aufweisen. In der vorliegenden Erfindung ist dies auch durch ganz oder teilweises Einfärben zumindest einer Teilfolie realisierbar.

Die Herstellung der erfindungsgemäß verwendeten Zwischenschichtfolien erfolgt in der Regel durch Extrusion oder Coextrusion, die unter bestimmten Bedingungen (Schmelzedruck, Schmelzetemperatur und Werkzeugtemperatur) unter Erhalt einer Schmelzbruchoberfläche, d.h. einer stochastischen Oberflächenrauheit.

Alternativ kann einer bereits hergestellten Zwischenschichtfolie durch einen Prägevorgang zwischen mindestens einem Walzenpaar eine regelmäßige, nicht stochastische Rauhigkeit aufgeprägt werden. Geprägte Folien weisen in der Regel ein verbessertes Entlüftungsverhalten bei der Verbundglasherstellung auf und werden bevorzugt im Automobilbereich eingesetzt.

Erfindungsgemäß verwendete Zwischenschichtfolien weisen unabhängig vom Herstellverfahren eine einseitig oder besonders bevorzugt beidseitig aufgebrachte Oberflächenstruktur mit einer Rauhigkeit R_{z} von 15 bis 150 µm, bevorzugt R_{z} von 15 bis 100 µm, besonders bevorzugt R_{z} von 20 bis 80 µm und insbesondere R_{z} von 30 bis 75 µm auf.

### Beispiele

Die unerwünschte Anregung des Fluorophors führt zu einer Trübung der Folie, die über den Haze-Wert bestimmt an einem Gerät Colorquest XE, Lichtart C/2° nach ASTM D 1003 bestimmt werden kann.

Es wurde der Haze-Wert von Zwischenschichtfolien, die Fluoreszenzfarbstoffe enthalten bestimmt, um die durch unerwünschte Anregung der Farbstoffe erhaltene Fluoreszenz zu simulieren. Die Zwischenschichtfolien wurden zwischen zwei Glasscheiben 2x2mm Planilux laminiert.

In dieser Messung repräsentiert die Lichtquelle des Messgerätes die Sonnenstrahlung (sichtbares Licht + UV), die von außen (Seite S) auf die fluoreszierende Folie trifft und zu einem künstlichen Haze führt, da der Farbstoff ungewollt angeregt wird. Der Detektor ist auf der Seite B (Betrachter) angeordnet.

Im Vergleichsbeipiel V1 wurde vor die Lichtquelle ein Laminat aus fluoreszierender Folie/PET-Folie und einer Folie mit Standard UV-Schutz (V2) angeordnet.

Im Beispiel 1 wurde vor die Lichtquelle ein aus fluoreszierender Folie, PET-Folie und einer Folie mit erfindungsgemäßen UV-Schutz angeordnet.

Die PET-Folie war 23 µm dick und diente zur räumlichen Trennung des Fluorophoren und des UV-Absorbers.

| Beispiel | Haze nach Colorquest XE, Lichtart C/2° nach ASTM D | Schichtdicke fluoreszierende PVB-Folie | Schichtdicke PVB-Folie mit UV Absorber |
|---|---|---|---|
| V1 | 1,19 | 0,38 mm | 0,76 mm |
| 1 | 0,46 | 0,38 mm | 0,76 mm |

Bei Verwendung eines Standard UV-Schutz wird die ungewollte Anregung des Farbstoffes nicht ausreichend verhindert. Hierdurch liegt die Trübung über 1, was einen nicht akzeptablen Wert für eine optisch klare Glascheibe darstellt.

Erst durch den erfindungsgemäßen UV-Schutz wird das UV-Licht im erforderlichen Maße herausgefiltert, sodass die unerwünschte Fluoreszenz unterdrückt wird und die Trübung/der Haze auf einen akzeptablen Wert sinkt.

## Patentansprüche

1. Fluoreszenz-Display aus einem Glas/Glaslaminat mit einer dem Sonnenlicht zugewandten Seite S und einer dem Betrachter des Fluorezenz-Displays zugewandten Seite B, mit mindestens einer Zwischenschichtfolie enthaltend UV-Absorber, Fluorophore und weichmacherhaltiges Polyvinylacetal, wobei UV-Absorber und Fluorophore in der Zwischenschichtfolie so räumlich angeordnet sind, das die Fluorophore durch UV-Strahlung angeregt werden können, ohne das die UV-Absorber diese absorbiert **dadurch gekennzeichnet, dass** die UV-Absorber auf der dem Sonnenlicht zugewandten Seite S des Fluorezenz-Displays angeordnet sind und die Zwischenschichtfolie
- mindestens eine erste Schicht weichmacherhaltiges Polyvinylacetal enthaltend einen niedermolekularen UV-Absorber, die auf der Seite S des Fluorezenz-Displays angeordnet ist,
- mindestens eine dünne Folie als Diffusionsperre für Fluorophor und niedermolekularen UV-Absorber und
- mindestens eine zweite Schicht weichmacherhaltiges Polyvinylacetal enthaltend Fluorophor, keinen niedermolekularen UV-Absorber oder einen nicht bei der gewählten Anregungswellenlänge des Fluorophor absorbierenden UV-Absorber, die auf der Seite B des Fluoresenz-Displays angeordnet ist,
aufweist.

2. Fluoreszenz-Display aus einem Glas/Glaslaminat mit einer dem Sonnenlicht zugewandten Seite S und einer dem Betrachter des Fluorezenz-Displays zugewandten Seite B, mit mindestens einer Zwischenschichtfolie enthaltend UV-Absorber, Fluorophore und weichmacherhaltiges Polyvinylacetal, wobei UV-Absorber und Fluorophore in der Zwischenschichtfolie so räumlich angeordnet sind, das die Fluorophore durch UV-Strahlung angeregt werden können, ohne das die UV-Absorber diese absorbiert **dadurch gekennzeichnet, dass** die UV-Absorber auf der dem Sonnenlicht zugewandten Seite S des Fluorezenz-Displays angeordnet sind und die Zwischenschichtfolie
- mindestens eine erste Schicht weichmacherhaltiges Polyvinylacetal enthaltend einen niedermolekularen UV-Absorber, die auf der Seite S des Fluorezenz-Display angeordnet ist
- auf oder an diese Schicht angeordnetes Fluorophor mit geringer Diffusionsneigung, die auf der Seite B des Fluoreszenz-Displays angeordnet ist
aufweist, wobei als Fluorophor mit geringer Diffusionsneigung fluoreszierende organische Polymere, Fluorophore mit ionischen Gruppen, fluoreszierende Nanopartikel oder im Weichmacher schlecht lösliche Fluorophore (bei 20°C weniger als 5g/L) eingesetzt werden.

3. Fluoreszenz-Display aus einem Glas/Glaslaminat mit einer dem Sonnenlicht zugewandten Seite S und einer dem Betrachter des Fluoreszenz-Displays zugewandten Seite B, mit mindestens einer Zwischenschichtfolie enthaltend UV-Absorber, Fluorophore und weichmacherhaltiges Polyvinylacetal, wobei UV-Absorber und Fluorophore in der Zwischenschichtfolie so räumlich angeordnet sind, das die Fluorophore durch UV-Strahlung angeregt werden können, ohne das die UV-Absorber diese absorbiert **dadurch gekennzeichnet, dass** die UV-Absorber auf der dem Sonnenlicht zugewandten Seite S des Fluoreszenz-Displays angeordnet sind und die Zwischenschichtfolie
- mindestens eine erste Schicht weichmacherhaltiges Polyvinylacetal enthaltend einen UV-Absorber mit geringer Diffusionsneigung, die auf der Seite S des Fluoreszenz-Displays angeordnet ist
- auf oder an diese Schicht angeordnetes Fluorophor mit geringer Diffusionsneigung, die auf der Seite B des Fluoreszenz-Displays angeordnet ist,
aufweist, wobei als Fluorophor mit geringer Diffusionsneigung fluoreszierende organische Polymere, Fluorophore mit ionischen Gruppen, fluoreszierende Nanopartikel oder im Weichmacher schlecht lösliche Fluorophore (bei 20°C weniger als 5g/L) und als UV-Absorber mit geringer Diffusionsneigung Polymere UV-Absorber, UV-Absorber mit ionischen Gruppen, UV-Absorbierende Nanopartikel oder als Partikel in der Folienmatrix vorliegende organische UV-Absorber eingesetzt werden.

4. Fluoreszenz-Display aus einem Glas/Glaslaminat mit einer dem Sonnenlicht zugewandten Seite S und einer dem Betrachter des Fluoreszenz-Displays zugewandten Seite B, mit mindestens einer Zwischenschichtfolie enthaltend UV-Absorber, Fluorophore und weichmacherhaltiges Polyvinylacetal, wobei UV-Absorber und Fluorophore in der Zwischenschichtfolie so räumlich angeordnet sind, das die Fluorophore durch UV-Strahlung angeregt werden können, ohne das die UV-Absorber diese absorbiert **dadurch gekennzeichnet, dass** die UV-Absorber auf der dem Sonnenlicht zugewandten Seite S des Fluoreszenz-Displays angeordnet sind und die Zwischenschichtfolie
- mindestens eine erste Schicht weichmacherhaltiges Polyvinylacetal
- auf oder an eine erste Seite dieser Schicht angeordnetes Fluorophor mit geringer Diffusionsneigung, die auf der Seite B des Fluoreszenz-Displays angeordnet ist
- auf oder an eine zweite Seite dieser Schicht angeordneten UV-Absorber mit geringer Diffusionsneigung, die auf der Seite S des Fluoreszenz-Display angeordnet ist,
aufweist, wobei als Fluorophor mit geringer Diffusionsneigung fluoreszierende organische Polymere, Fluorophore mit ionischen Gruppen, fluoreszierende Nanopartikel oder im Weichmacher schlecht lösliche Fluorophore (bei 20°C weniger als 5g/L) und als UV-Absorber mit geringer Diffusionsneigung Polymere UV-Absorber, UV-Absorber mit ionischen Gruppen, UV-Absorbierende Nanopartikel oder als Partikel in der Folienmatrix vorliegende organische UV-Absorber eingesetzt werden.

5. Fluoreszenz-Display aus einem Glas/Glaslaminat mit einer dem Sonnenlicht zugewandten Seite S und einer dem Betrachter des Fluoreszenz-Displays zugewandten Seite B, mit mindestens einer Zwischenschichtfolie enthaltend UV-Absorber, Fluorophore und weichmacherhaltiges Polyvinylacetal, wobei UV-Absorber und Fluorophore in der Zwischenschichtfolie so räumlich angeordnet sind, das die Fluorophore durch UV-Strahlung angeregt werden können, ohne das die UV-Absorber diese absorbiert **dadurch gekennzeichnet, dass** die UV-Absorber auf der dem Sonnenlicht zugewandten Seite S des Fluoreszenz-Displays angeordnet sind und die Zwischenschichtfolie
- mindestens eine erste Schicht weichmacherhaltiges Polyvinylacetal enthaltend einen niedermolekularen UV-Absorber, die auf der Seite S des Fluoreszenz-Displays angeordnet ist
- mindestens eine dünne Folie als Diffusion sperre enthaltend mindestens ein Fluorophor, die auf der Seite B des Fluoreszenz-Displays angeordnet ist
- mindestens eine zweite Schicht weichmacherhaltiges Polyvinylacetal enthaltend keinen niedermolekularen UV-Absorber oder einen nicht bei der gewählten Anregungswellenlänge des Fluorophor absorbierenden UV-Absorber,
aufweist.

6. Fluoreszenz-Display nach einem der Ansprüche 1 bis 5 **dadurch gekennzeichnet, das** die Zwischenschichtfolie mindestens eine Schicht weichmacherhaltiges Polyvinylacetal mit einen Alkalititer im Bereich 0 - 50 aufweist.

7. Fluoreszenz-Display nach einem der Ansprüche 1 bis 6 **dadurch gekennzeichnet, dass** die Zwischenschichtfolie mindestens eine Schicht weichmacherhaltiges Polyvinylacetal mit Lichtstablisatoren zur Unterdrückung von Radikalkettenreaktionen aufweist.

8. Fluoreszenz-Display nach einem der Ansprüche 1 bis 7 **dadurch gekennzeichnet, dass** die Zwischenschichtfolie mindestens eine Schicht weichmacherhaltiges Polyvinylacetal mit einem phenolischen Antioxidants aufweist.

9. Fluoreszenz-Display nach einem der Ansprüche 1 bis 8 **dadurch gekennzeichnet, dass** die Zwischenschichtfolie mindestens eine akustisch dämpfende Lage enthält, so dass die Zwischenschichtfolie bei Lamination zwischen 2 x 2.1 mm Glas und Messung gemäß ISO TS 16940 bei 20°C einen Verlustfaktor der lsten Mode von mehr als 0.15 aufweist.

10. Fluoreszenz-Display nach einem der Ansprüche 1 bis 8 **dadurch gekennzeichnet, dass** die dem Sonnenlicht zugewandte Seite oder Schicht S bei Messung im Verbund zwischen 2 x 2.1 mm Klarglas gemäß ISO 13837, Convention" A" (2008) eine UV-Transmission Tuv(400) von weniger als 30% aufweist.

11. Fluoreszenz-Display nach einem der Ansprüche 1 bis 9 **dadurch gekennzeichnet, dass** die dem Sonnenlicht zugewandte Seite oder Schicht S bei Messung im Verbund zwischen 2 x 2.1 mm Klarglas und Aufnahme eines UV/VIS Transmissionsspektrums gemäß ISO 13837 (2008) eine UV-Transmission T_{UV} von nicht mehr als 50% aufweist.

12. Verwendung der Fluoreszenz-Displays nach einem der Ansprüche 1 bis 11 als Displaysystem für KFZ-Windschutzscheiben, KFZ-Seitenverglasung, Verglasungen für Flugzeuge, Bahnen oder Schiffe und für Anwendungen im Baubereich wie Schaufenster, Aufzüge, oder Fassadenverglasungen.

13. KFZ-Fahrgastzelle mit einer Windschutzscheibe enthaltend ein Fluoreszenz-Display nach einem der Ansprüche 1 bis 11 und Seitenscheiben aus oder mit UV-Absorbierendem Glas.

## Claims

1. A fluorescent display formed from a glass/glass laminate with a side S facing the sunlight and a side B facing the observer of the fluorescent display, having at least one interlayer film containing UV absorbers, fluorophores and plasticized polyvinyl acetal, wherein the UV absorbers and the fluorophores in the interlayer film are spatially disposed in a manner such that the fluorophores can be excited by UV radiation without the UV absorbers absorbing said radiation, **characterized in that** the UV absorbers are disposed on the side S of the fluorescent display facing the sunlight and the interlayer film comprises:
- at least one first layer of plasticized polyvinyl acetal containing a low molecular weight UV absorber which is disposed on the side S of the fluorescent display,
- at least one thin film as a diffusion barrier for the fluorophore and the low molecular weight UV absorbers, and
- at least one second layer of plasticized polyvinyl acetal containing the fluorophore, no low molecular weight UV absorbers nor a UV absorber which does not absorb at the selected excitation wavelength of the fluorophore, disposed on side B of the fluorescent display.

2. A fluorescent display formed from a glass/glass laminate with a side S facing the sunlight and a side B facing the observer of the fluorescent display, having at least one interlayer film containing UV absorbers, fluorophores and plasticized polyvinyl acetal, wherein the UV absorbers and the fluorophores in the interlayer film are spatially disposed in a manner such that the fluorophores can be excited by UV radiation without the UV absorbers absorbing said radiation, **characterized in that** the UV absorbers are disposed on the side S of the fluorescent display facing the sunlight and the interlayer film comprises:
- at least one first layer of plasticized polyvinyl acetal containing a low molecular weight UV absorber which is disposed on the side S of the fluorescent display,
- a fluorophore disposed on or in said layer and having a low diffusion tendency, which is disposed on side B of the fluorescent display, wherein fluorescent organic polymers, fluorophores containing ionic groups, fluorescent nanoparticles or fluorophores which have a low solubility in the plasticizer (less than 5 g/L at 20 °C) are used as the fluorophore having a low diffusion tendency.

3. A fluorescent display formed from a glass/glass laminate with a side S facing the sunlight and a side B facing the observer of the fluorescent display, having at least one interlayer film containing UV absorbers, fluorophores and plasticized polyvinyl acetal, wherein the UV absorbers and the fluorophores in the interlayer film are spatially disposed in a manner such that the fluorophores can be excited by UV radiation without the UV absorbers absorbing said radiation, **characterized in that** the UV absorbers are disposed on the side S of the fluorescent display facing the sunlight and the interlayer film comprises:
- at least one first layer of plasticized polyvinyl acetal containing a UV absorber with a low diffusion tendency, which is disposed on the side S of the fluorescent display,
- a fluorophore disposed on or in said layer and having a low diffusion tendency, which is disposed on side B of the fluorescent display, wherein fluorescent organic polymers, fluorophores containing ionic groups, fluorescent nanoparticles or fluorophores which have a low solubility in the plasticizer (less than 5 g/L at 20 °C) are used as the fluorophore having a low diffusion tendency and polymeric UV absorbers, UV absorbers containing ionic groups, UV-absorbing nanoparticles or organic UV absorbers present in the film matrix as particles are used as the UV absorbers having a low diffusion tendency.

4. A fluorescent display formed from a glass/glass laminate with a side S facing the sunlight and a side B facing the observer of the fluorescent display, having at least one interlayer film containing UV absorbers, fluorophores and plasticized polyvinyl acetal, wherein the UV absorbers and the fluorophores in the interlayer film are spatially disposed in a manner such that the fluorophores can be excited by UV radiation without the UV absorbers absorbing said radiation, **characterized in that** the UV absorbers are disposed on the side S of the fluorescent display facing the sunlight and the interlayer film comprises:
- at least one first layer of plasticized polyvinyl acetal,
- a fluorophore disposed on or in said layer and having a low diffusion tendency, which is disposed on side B of the fluorescent display,
- UV absorbers disposed on or in a second side of said layer and having a low diffusion tendency, said UV absorbers being disposed on side S of the fluorescent display, wherein fluorescent organic polymers, fluorophores containing ionic groups, fluorescent nanoparticles or fluorophores which have a low solubility in the plasticizer (less than 5 g/L at 20 °C) are used as the fluorophore having a low diffusion tendency, and wherein polymeric UV absorbers, UV absorbers containing ionic groups, UV-absorbing nanoparticles or organic UV absorbers present in the film matrix as particles are used as the UV absorbers having a low diffusion tendency.

5. A fluorescent display formed from a glass/glass laminate with a side S facing the sunlight and a side B facing the observer of the fluorescent display, having at least one interlayer film containing UV absorbers, fluorophores and plasticized polyvinyl acetal, wherein the UV absorbers and the fluorophores in the interlayer film are spatially disposed in a manner such that the fluorophores can be excited by UV radiation without the UV absorbers absorbing said radiation, **characterized in that** the UV absorbers are disposed on the side S of the fluorescent display facing the sunlight and the interlayer film comprises:
- at least one first layer of plasticized polyvinyl acetal containing a low molecular weight UV absorber which is disposed on the side S of the fluorescent display,
- at least one thin film as a diffusion barrier containing at least one fluorophore, which is disposed on the side B of the fluorescence display,
- at least one second layer of plasticized polyvinyl acetal containing no low molecular weight UV absorbers, nor a UV absorber which does not absorb at the selected excitation wavelength of the fluorophore.

6. The fluorescent display as claimed in one of claims 1 to 5, **characterized in that** the interlayer film comprises at least one layer of plasticized polyvinyl acetal having an alkali titre in the range 0 to 50.

7. The fluorescent display as claimed in one of claims 1 to 6, **characterized in that** the interlayer film comprises at least one layer of plasticized polyvinyl acetal with light stabilizers in order to suppress radical chain reactions.

8. The fluorescent display as claimed in one of claims 1 to 7, **characterized in that** the interlayer film comprises at least one layer of plasticized polyvinyl acetal containing a phenolic antioxidant.

9. The fluorescent display as claimed in one of claims 1 to 8, **characterized in that** the interlayer film contains at least one acoustically damping layer such that the interlayer film exhibits a 1st mode loss factor of more than 0.15 following lamination between 2×2.1 mm glass and measurement in accordance with ISO TS 16940 at 20° C.

10. The fluorescent display as claimed in one of claims 1 to 8, **characterized in that** the side or layer S facing the sunlight exhibits a UV transmission Tᵤᵥ (400) of less than 30% in a composite measurement between 2×2.1 mm clear glass in accordance with ISO 13837, Convention "A" (2008).

11. The fluorescent display as claimed in one of claims 1 to 9, **characterized in that** the side or layer S facing the sunlight exhibits a UV transmission Tᵤᵥ of not more than 50% in a composite measurement between 2×2.1 mm clear glass and recording a UV/VIS transmission spectrum in accordance with ISO 13837 (2008).

12. Use of the fluorescent display as claimed in one of claims 1 to 11, as a display system for motor vehicle windscreens, motor vehicle side glazing, glazing for aircraft, trains or ships and for shop window, lift or facade glazing applications.

13. A motor vehicle passenger compartment with a windscreen containing a fluorescent display as claimed in one of claims 1 to 11 and side panes formed from or containing UV-absorbing glass.

## Revendications

1. Dispositif d'affichage à fluorescence en verre / verre laminé, comportant une face S tournée vers la lumière du soleil et une face B tournée vers l'utilisateur du dispositif d'affichage à fluorescence, comportant au moins un film intercalaire lequel contient des filtres ultraviolets, des fluorophores et de l'acétal de polyvinyle contenant des plastifiants, les filtres ultraviolets et les fluorophores présentant, au sein dudit film intercalaire, une disposition spatiale telle que les fluorophores peuvent être excités par le rayonnement UV sans que les filtres ultraviolet absorbent ce dernier, **caractérisé en ce que** les filtres ultraviolets sont disposés sur la face S, tournée vers la lumière du soleil, du dispositif d'affichage à fluorescence et que le film intercalaire comporte
- au moins une première couche d'acétal de polyvinyle contenant des plastifiants, laquelle contient un filtre ultraviolet à faible masse moléculaire et laquelle est disposée sur la face S du dispositif d'affichage à fluorescence,
- au moins une feuille mince servant à bloquer la diffusion du fluorophore et du filtre ultraviolet à faible masse moléculaire, et
- au moins une deuxième couche d'acétal de polyvinyle contenant des plastifiants, laquelle contient du fluorophore, pas de filtres ultraviolets à faible masse moléculaire ou bien un filtre ultraviolet ne présentant aucune absorption à la longueur d'onde d'excitation telle que choisie pour ledit fluorophore, et laquelle est disposée sur la face B du dispositif d'affichage à fluorescence.

2. Dispositif d'affichage à fluorescence en verre / verre laminé, comportant une face S tournée vers la lumière du soleil et une face B tournée vers l'utilisateur du dispositif d'affichage à fluorescence, comportant au moins un film intercalaire lequel contient des filtres ultraviolets, des fluorophores et de l'acétal de polyvinyle contenant des plastifiants, les filtres ultraviolets et les fluorophores présentant, au sein dudit film intercalaire, une disposition spatiale telle que les fluorophores peuvent être excités par le rayonnement UV sans que les filtres ultraviolet absorbent ce dernier, **caractérisé en ce que** les filtres ultraviolets sont disposés sur la face S, tournée vers la lumière du soleil, du dispositif d'affichage à fluorescence et que le film intercalaire comporte
- au moins une première couche d'acétal de polyvinyle contenant des plastifiants, laquelle contient un filtre ultraviolet à faible masse moléculaire et laquelle est disposée sur la face S du dispositif d'affichage à fluorescence,
- du fluorophore doté d'une faible tendance à la diffusion, disposé sur cette couche ou dans la prolongation de celle-ci, la disposition correspondant à la face B du dispositif d'affichage à fluorescence, le fluorophore doté d'une faible tendance à la diffusion, que l'on met en oeuvre, correspondant à des polymères organiques fluorescents, des fluorophores pourvus de groupes ioniques, des nanoparticules fluorescentes ou à des fluorophores présentant une faible solubilité dans le plastifiant (inférieure 5 g/L à 20 °C).

3. Dispositif d'affichage à fluorescence en verre / verre laminé, comportant une face S tournée vers la lumière du soleil et une face B tournée vers l'utilisateur du dispositif d'affichage à fluorescence, comportant au moins un film intercalaire lequel contient des filtres ultraviolets, des fluorophores et de l'acétal de polyvinyle contenant des plastifiants, les filtres ultraviolets et les fluorophores présentant, au sein dudit film intercalaire, une disposition spatiale telle que les fluorophores peuvent être excités par le rayonnement UV sans que les filtres ultraviolet absorbent ce dernier, **caractérisé en ce que** les filtres ultraviolets sont disposés sur la face S, tournée vers la lumière du soleil, du dispositif d'affichage à fluorescence et que le film intercalaire comporte
- au moins une première couche d'acétal de polyvinyle contenant des plastifiants, laquelle contient un filtre ultraviolet doté d'une faible tendance à la diffusion et laquelle est disposée sur la face S du dispositif d'affichage à fluorescence,
- du fluorophore doté d'une faible tendance à la diffusion, disposé sur cette couche ou dans la prolongation de celle-ci, la disposition correspondant à la face B du dispositif d'affichage à fluorescence, le fluorophore doté d'une faible tendance à la diffusion, que l'on met en oeuvre, correspondant à des polymères organiques fluorescents, des fluorophores pourvus de groupes ioniques, des nanoparticules fluorescentes ou à des fluorophores présentant une faible solubilité dans le plastifiant (inférieure 5 g/L à 20 °C) et le filtre ultraviolet doté d'une faible tendance à la diffusion, que l'on met en oeuvre, correspondant à des filtres ultraviolets polymères, des filtres ultraviolets pourvus de groupes ioniques, des nanoparticules capables d'absorber des ultraviolets ou à des filtres ultraviolets organiques se présentant comme particules au sein de la matrice du film.

4. Dispositif d'affichage à fluorescence en verre / verre laminé, comportant une face S tournée vers la lumière du soleil et une face B tournée vers l'utilisateur du dispositif d'affichage à fluorescence, comportant au moins un film intercalaire lequel contient des filtres ultraviolets, des fluorophores et de l'acétal de polyvinyle contenant des plastifiants, les filtres ultraviolets et les fluorophores présentant, au sein dudit film intercalaire, une disposition spatiale telle que les fluorophores peuvent être excités par le rayonnement UV sans que les filtres ultraviolet absorbent ce dernier, **caractérisé en ce que** les filtres ultraviolets sont disposés sur la face S, tournée vers la lumière du soleil, du dispositif d'affichage à fluorescence et que le film intercalaire comporte
- au moins une première couche d'acétal de polyvinyle contenant des plastifiants
- du fluorophore doté d'une faible tendance à la diffusion, disposé sur une première face de cette couche ou dans la prolongation de celle-ci, la disposition correspondant à la face B du dispositif d'affichage à fluorescence
- du filtre ultraviolet doté d'une faible tendance à la diffusion, disposé sur une deuxième face de cette couche ou dans la prolongation de celle-ci, la disposition correspondant à la face S du dispositif d'affichage à fluorescence, le fluorophore doté d'une faible tendance à la diffusion, que l'on met en oeuvre, correspondant à des polymères organiques fluorescents, des fluorophores pourvus de groupes ioniques, des nanoparticules fluorescentes ou à des fluorophores présentant une faible solubilité dans le plastifiant (inférieure 5 g/L à 20 °C) et le filtre ultraviolet doté d'une faible tendance à la diffusion, que l'on met en oeuvre, correspondant à des filtres ultraviolets polymères, des filtres ultraviolets pourvus de groupes ioniques, des nanoparticules capables d'absorber des ultraviolets ou à des filtres ultraviolets organiques se présentant comme particules au sein de la matrice du film.

5. Dispositif d'affichage à fluorescence en verre / verre laminé, comportant une face S tournée vers la lumière du soleil et une face B tournée vers l'utilisateur du dispositif d'affichage à fluorescence, comportant au moins un film intercalaire lequel contient des filtres ultraviolets, des fluorophores et de l'acétal de polyvinyle contenant des plastifiants, les filtres ultraviolets et les fluorophores présentant, au sein dudit film intercalaire, une disposition spatiale telle que les fluorophores peuvent être excités par le rayonnement UV sans que les filtres ultraviolet absorbent ce dernier, **caractérisé en ce que** les filtres ultraviolets sont disposés sur la face S, tournée vers la lumière du soleil, du dispositif d'affichage à fluorescence et que le film intercalaire comporte
- au moins une première couche d'acétal de polyvinyle contenant des plastifiants, laquelle contient un filtre ultraviolet à faible masse moléculaire et laquelle est disposée sur la face S du dispositif d'affichage à fluorescence
- au moins une feuille mince servant à bloquer la diffusion et contenant au moins un fluorophore, laquelle est disposée sur la face B du dispositif d'affichage à fluorescence
- au moins une deuxième couche d'acétal de polyvinyle contenant des plastifiants, laquelle ne contient pas de filtres ultraviolets à faible masse moléculaire ou bien un filtre ultraviolet ne présentant aucune absorption à la longueur d'onde d'excitation telle que choisie pour ledit fluorophore.

6. Dispositif d'affichage à fluorescence selon l'une des revendications 1 à 5, **caractérisé en ce que** le film intercalaire comporte au moins une couche d'acétal de polyvinyle contenant des plastifiants et présentant un taux de matières alcalines compris entre 0 et 50.

7. Dispositif d'affichage à fluorescence selon l'une des revendications 1 à 6, **caractérisé en ce que** le film intercalaire comporte au moins une couche d'acétal de polyvinyle contenant des plastifiants et comportant des agents stabilisateurs vis-à-vis de la lumière pour empêcher des réactions radicalaires en chaîne.

8. Dispositif d'affichage à fluorescence selon l'une des revendications 1 à 7, **caractérisé en ce que** le film intercalaire comporte au moins une couche d'acétal de polyvinyle contenant des plastifiants et comportant un antioxydant de type phénol.

9. Dispositif d'affichage à fluorescence selon l'une des revendications 1 à 8, **caractérisé en ce que** le film intercalaire comporte au moins une couche à effet d'isolation phonique, de manière à ce que le film intercalaire présente, lorsqu'il est laminé entre 2 x 2,1 mm verre, un facteur d'atténuation supérieur à 0,15 en premier mode, mesuré selon ISO TS 16940 à 20 °C.

10. Dispositif d'affichage à fluorescence selon l'une des revendications 1 à 8, **caractérisé en ce que** la face tournée vers la lumière du soleil, ou la couche S, présente une transmission d'ultraviolets T_{UV} (400) inférieure à 30 %, si la mesure est effectuée sous forme d'un élément composite entre 2 x 2,1 mm de verre transparent selon ISO 13837 Convention « A » (2008).

11. Dispositif d'affichage à fluorescence selon l'une des revendications 1 à 9, **caractérisé en ce que** la face tournée vers la lumière du soleil, ou la couche S, présente une transmission d'ultraviolets T_{UV} (400) inférieure ou égale à 50 %, si la mesure est effectuée sous forme d'un élément composite entre 2 x 2,1 mm de verre transparent en enregistrant un spectre de transmission UV/VIS selon ISO 13837 (2008).

12. Utilisation du dispositif d'affichage à fluorescence selon l'une des revendications 1 à 11 en tant que système d'affichage pour des pare-brise de véhicules à moteur, des vitrages latéraux de véhicules à moteur, des vitrages pour avions, trains ou navires, et pour des applications relevant du domaine du bâtiment telles que les vitrines, les ascenseurs ou les vitrages de façade.

13. Habitacle de véhicule à moteur comportant un pare-brise contenant un dispositif d'affichage à fluorescence selon l'une des revendications 1 à 11 et des vitres latérales réalisées exclusivement ou partiellement en verre filtrant les ultraviolets.
